(19) Europäisches Patentamt
European Patent Office
Office européen des brevets

(11) **EP 2 491 074 B1**

(12) **EUROPÄISCHE PATENTSCHRIFT**

(45) Veröffentlichungstag und Bekanntmachung des Hinweises auf die Patenterteilung:
**10.12.2014   Patentblatt 2014/50**

(51) Int Cl.:
*C08J 5/18* (2006.01)          *B65D 85/10* (2006.01)
*B65D 65/40* (2006.01)         *C08K 5/00* (2006.01)
*C08K 5/098* (2006.01)         *B32B 5/18* (2006.01)
*B32B 27/32* (2006.01)

(21) Anmeldenummer: **10768413.6**

(22) Anmeldetag: **13.10.2010**

(86) Internationale Anmeldenummer:
**PCT/EP2010/006241**

(87) Internationale Veröffentlichungsnummer:
**WO 2011/047798 (28.04.2011 Gazette 2011/17)**

(54) **VERWENDUNG EINER PORÖSEN POLYPROPYLENFOLIE ALS INNENUMHÜLLUNG EINER ZIGARETTENVERPACKUNG**

USE OF A POROUS POLYPROPYLENE FILM AS INNER WRAPPING OF A CIGARETTE PACKAGE

UTILISATION D'UN FILM POREUX EN POLYPROPYLENE COMME ENVELOPPE INTERNE D'UN PAQUET DE CIGARETTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.10.2009   DE 102009050275**

(43) Veröffentlichungstag der Anmeldung:
**29.08.2012   Patentblatt 2012/35**

(73) Patentinhaber: **Treofan Germany GmbH & Co. KG**
**66539 Neunkirchen (DE)**

(72) Erfinder:
• **SPEITH-HERFURTH, Angela**
  **56766 Auderath (DE)**

• **GOTTFREUND, Thomas**
  **66386 St. Ingbert (DE)**
• **BRAUN, Ralph**
  **66450 Bexbach (DE)**

(74) Vertreter: **Kremer, Viola**
**Treofan Germany GmbH & Co. KG**
**Am Prime Parc 17**
**65479 Raunheim (DE)**

(56) Entgegenhaltungen:
**EP-A2- 0 317 818          WO-A1-00/12302**
**WO-A2-2007/051791     DE-A1- 3 632 376**

**Beschreibung**

Die Erfindung betrifft die Verwendung einer einschichtigen oder mehrschichtigen biaxial orientierten Polypropylen-Folie mit mindestens einer porösen Schicht als Inner-Liner einer Zigarettenverpackung, dadurch gekennzeichnet, dass die poröse Schicht eine offenporige netzwerkartige Struktur aufweist.

Zigaretten-Packungen sind üblicherweise so aufgebaut, daß der Packungsinhalt, nämlich eine Zigarettengruppe, von einer Innenumhüllung umgeben ist. Diese Innenumhüllung besteht nach dem Stand der Technik aus einem Stanniolzuschnitt, aus Aluminiumfolie, einer Aluminium-Papierkaschierung oder einem metallisiertem Papier. Häufig ist diese Innenumhüllung mit einer Bedruckung oder einer Prägung versehen.

Bei der Herstellung der Verpackung werden die Zigaretten in diese Innenumhüllung, dem sogenannten Innerliner, eingewickelt und die umwickelte Zigarettengruppe von der Verpackungsmaschine mit der Außenverpackung, beispielsweise einer Klappdeckelpackung oder einem Papieretikett, umfaltet. Der Innerliner wird an der Verpackungsmaschine von einer Bobine abgezogen und auf die passende Länge zugeschnitten. Gegebenenfalls werden gezielte Einschnitte angebracht, um eine Soll-Trennstelle zu erzeugen, die beim ersten Öffnen der Packungen ein gezieltes Aufreißen des Inner-Liners ermöglicht.

Papiere und Metallfolien sind auf Grund der Falteigenschaften und der Reißeigenschaften besonders vorteilhafte Materialien für Inner-Liner. In dieser Anwendung müssen die Materialbahnen gute Falteigenschaften (Dead-Fold) aufweisen, die sicherstellen, daß die eingeschlagenen Zigaretten so fest umwickelt sind, daß sie bis zum Anbringen der Außenverpackung als Bündel erhalten bleiben. Des weiteren spielt das Reißverhalten eine wichtige Rolle, damit ein kontrolliertes Öffnen des Liners gewährleistet ist. Schließlich müssen die Zuschnitte eine gute Planlage aufweisen, damit die Verarbeitung nicht durch ein Aufrollen der Materialbahn behindert wird.

Dieses Eigenschaftsprofil wird von Papier und metallisierten Papieren gut erfüllt. Folien aus thermoplastischen Polymeren haben inhärent sehr schlechte Falteigenschaften und gelten daher generell als ungeeignetes Material für diese Anwendung. Des weiteren neigen Kunststofffolien in Form von kleinen Zuschnitten zu Curling, d.h. diese Zuschnitte rollen sich von alleine in Längs- oder Querrichtung der Folienbahn. Diese Nachteile treffen insbesondere auch auf opake Folien aus Polypropylen wie in DE 3632376 beschrieben zu.

Da Kunststofffolien jedoch unter Umweltaspekten und Kostengesichtspunkten häufig Vorteile gegenüber Papier haben ist die Substitution von Papier in verschiedensten Anwendungen ein ständiges Anliegen.

WO 2007/051791 A2 betrifft die Verwendung einer biaxial orientierten Folie, die ein Polymer aus einer aliphatischen Hydroxycarbonsäure, enthält als Inner-Liner einer Zigarettenverpackung.

WO 00/12302 A1 offenbart eine Polyethylen-Folie, die eine offenporige netzwerkartige Struktur aufweist, und als Inner-Liner einer Zigarettenverpackung verwendet.

EP0317818 A2 betrifft eine mehrschichtige Verpackung für Rauchartikelpakete, die eine erste und eine zweite biaxial orientierte Polypropylen-Homopolymer-Schicht aufweist, aber keine offenporige netzwerkartige Struktur hat.

Der Erfindung lag somit die Aufgabe zugrunde, eine Folie zur Verfügung zu stellen, welche sich zur Verwendung als Inner-Liner in Zigarettenverpackungen eignet und den Anforderungen in dieser Anwendung genügt.

Diese Aufgabe wird gelöst durch die Verwendung einer einschichtigen oder mehrschichtigen biaxial orientierten Folie als Inner-Liner einer Zigarettenverpackung, wobei die Folie 70 bis 100 Gew.-% Polypropylen enthält und eine poröse Struktur aufweist.

Die Erfindung kommt insbesondere bei Klappschachteln und Weichverpackungen zum Einsatz. Der Inner-Liner aus poröser Polypropylenfolie ist insbesondere für Klappschachteln geeignet. Diese Schachteln bestehen üblicherweise aus dünnem Karton. Ein Schachtelteil dient zur Aufnahme des Packungsinhalts, nämlich einer Zigarettengruppe, die allseitig von der gefalteten Innenumhüllung aus poröser Polypropylenfolie umgeben ist. An einer Rückwand des Schachtelteils ist ein Deckel angelenkt, der über eine Faltlinie mit der Schachtel verbunden ist. Weitere Einzelheiten zur Ausgestaltung von Klappfaltschachteln sind bekannt und beispielsweise in der DE 43 33 462 beschrieben, auf welche Beschreibung hiermit ausdrücklich Bezug genommen wird.

Die Zigarettengruppe als Packungsinhalt ist von der erfindungsgemäßen Innenumhüllung allseitig umgeben. Die so entstehende Einheit als Packungsinhalt ist ein Zigarettenblock. Erfindungsgemäß wird zur Herstellung eines solchen Zigarettenblocks zur Umhüllung der Zigaretten eine poröse Polypropylenfolie eingesetzt.

Hierfür wird die poröse Polypropylenfolie auf eine geeignete Breite zugeschnitten und als Rollenware an der Verpackungsmaschine von einer Bobine abgezogen und auf die passende Länge geschnitten. Die Gestaltung des Zuschnitts richtet sich nach der Art der Faltung, die zur Anwendung kommt. Beispielsweise wird der zugeschnittene Folienabschnitt nach dem Prinzip der Seitenfaltung um die Zigarettengruppe herumgelegt. An eine durchgehende, geschlossene Bodenwand schließen Vorderwand und Rückwand an. Beide schmalen, aufrechten Seitenwände bestehen aus einander teilweise überdeckenden Seitenlappen. Eine obere Stirnwand wird ebenfalls durch Faltung gebildet, derart, dass innenliegende Ecklappen und trapezförmige Längslappen gebildet sind.

In einer weiteren Ausführungsform kann die Innenumhüllung im oberen Bereich mit einer Abziehlasche, einem sogenannten Flap, versehen werden. Hierfür wird eine Perforationslinie oder eine andere Schwächungslinie über die volle Breite des Zuschnitts angebracht. Beim ersten Öffnen der Packung wird die Abziehlasche durch Erfassen des äußeren Längslappens abgetrennt.

Der Zuschnitt wird im allgemeinen so von der Materialbahn abgetrennt, daß der Zuschnitt in Längsrichtung der Folie liegt. Die Materialbahn kann gegebenenfalls mit Druckflächen versehen werden, die vorzugsweise in Längsrichtung der Bahn mit Abstand voneinander angeordnet sind. Die Trennschnitte zum Abteilen der Zuschnitte erfolgen quer zur Laufrichtung der Folie. Die exakte Positionierung der Trennlinie kann durch eine Druckmarkensteuerung aufgrund einer Druckmarke erfolgen.

Alternativ kann der Zuschnitt so ausgebildet sein, dass die Breite der Folienbahn der Länge des Zuschnitts entspricht. Die Zuschnitte sind bei dieser Gestaltung mit ihrer Längserstreckung quer zur Materialbahn gerichtet. In diesem Falle ist die Materialbahn zu beiden Seiten mit durchlaufenden Druckstreifen versehen, insbesondere mit unterschiedlicher Breite.

Zuschnitte und Techniken zur Faltung der Inner-Liner, Einzelheiten zur Bedruckung von Zuschnitten und weitere Details sind an sich im Stand der Technik bekannt und beispielsweise in DE 201 20 977 oder DE 43 33 462 oder DE 25 11 241 beschrieben, auf welche hiermit ausdrücklich Bezug genommen wird.

Die in der beschriebenen Weise ausgebildeten Zigarettenpackungen mit Inner-Liner sind im allgemeinen zusätzlich mit einer Außenumhüllung aus Folie, insbesondere Polypropylenfolie oder Zellglas versehen.

Erfindungsgemäß ist der Inner-Liner aus einer biaxial orientierten Folie, die eine oder mehrere Schichten aufweisen kann. Hauptbestandteil der Folie ist ein Propylenpolymer. Im allgemeinen enthält die Folie mindestens 70-100 Gew.-% Propylenpolymer. Es ist erfindungswesentlich, daß die Folie eine netzwerkartige Struktur aufweist, durch welche die Folie porös ist, d.h. eine hohe Gasdurchlässigkeit aufweist.

Überraschenderweise läßt sich die poröse Polypropylenfolie hervorragend als Inner-Liner verwenden. Es wurde gefunden, daß die Folie nach dem Einschlag das Zigarettenbündel ausreichend fixiert. Die Folie zeigt keine Störungen bei der Verarbeitung auf der Verpackungsmaschine. Es zeigte sich, daß die Zuschnitte überraschend wenig, teilweise gar keine Rollneigung aufweisen und somit die Probleme anderer thermoplastischen Folien, insbesondere Rollneigung der opaken Polypropylenfolien, vermieden werden. Des weiteren sind die porösen Folien besonders vorteilhaft, weil auch bei schwankenden klimatischen Bedingungen eine gute stabile Verarbeitbarkeit gegeben ist. Es zeigte sich, daß im Vergleich zu Papier schwankende Temperaturen oder eine schwankende Luftfeuchtigkeit die Folie und ihre Eigenschaften kaum beeinflußt und keine Auswirkungen auf die Verwendung als Inner-Liner hat und sich immer gleich gut verarbeiten läßt. Des weiteren tragen die porösen Folien zu einer ausgeglichenen Luftfeuchtigkeit in der Zigarettenverpackung bei, ohne das der Tabak der Zigaretten austrocknet.

Gegebenenfalls kann zur Optimierung weiterer Eigenschaften die Folie beschichtet werden. Typische Beschichtungen sind haftvermittelnde, schlupfverbessernd oder dehäsiv wirkende Schichten. Gegebenenfalls können diese zusätzlichen Schichten über in-line coating mittels wässriger oder nicht-wässriger Dispersionen vor der Querverstreckung oder off-line, nach der Herstellung der Folie, aufgetragen werden.

In einer weiteren Ausführungsform werden die porösen Polypropylenfolien vor der Verwendung als Inner-Liner metallisiert. Bei der Anwendung als Inner-liner bildet die metallisierte Seite die sichtbare Seite. In einer weiteren Ausführungsform kann die Folie beidseitig metallisiert werden.

In einer weiteren Ausführungsform kann die metallisierte oder unmetallisierte Folie zusätzlich mit einer Prägung versehen werden, die zum einen dekorativen Charakter hat und zu einer weiter verbesserten Planlage beiträgt. Überraschenderweise lassen sich die Folien nach Metallisierung und Prägung genauso gut wie bisher verwendete Papier-Inner-Liner verarbeiten. Außerdem kommen die geprägten metallisierten Folien dem optischen Erscheinungsbild von metallisierten Papieren sehr nahe.

Es wurde gefunden, daß sich eine Folie mit einer porösen Schicht hervorragend als Inner-Liner verwenden läßt, wobei diese Mikroporosität indirekt durch ß-Nukleierungsmittel erzeugt wird. Diese so erzeugten Strukturen unterscheiden sich signifikant von denen herkömmlicher vakuolenhaltiger Folien mit geschlossenen Hohlräumen, wie beispielsweise in DE 3632376 beschrieben.

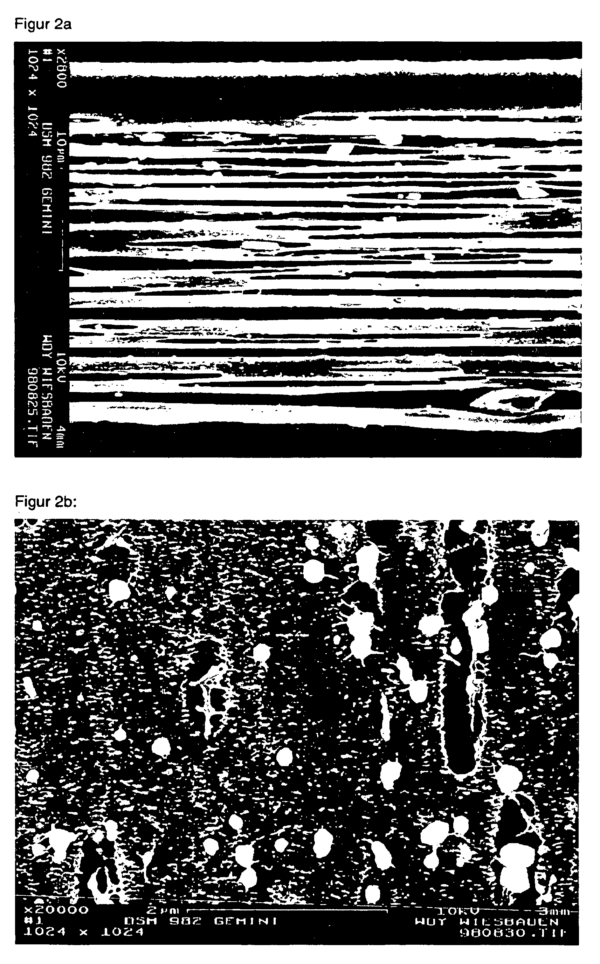

Die Figuren 2a und 2b zeigen die typische Struktur einer vakuolenhaltigen Schicht aus thermoplastischem Polymer und unverträglichen Füllstoffen im Querschnitt (2a) und in einer Draufsicht (2b). Diese Struktur weisen die Folien gemäß DE 3632376 auf. Durch die Unverträglichkeit der vakuoleninitierenden Teilchen kommt es beim Verstrecken zu Abrißen zwischen der Oberfläche des Teilchens und der Polymermatrix und es entsteht ein geschlossener luftgefüllter Hohlraum, der als Vakuole bezeichnet wird. Diese Vakuolen sind über die gesamte Schicht verteilt und reduzieren die Dichte der Folien, bzw. der Schicht. Da die Vakuolen geschlossen sind ist die Struktur insgesamt nicht gas-durchlässig.

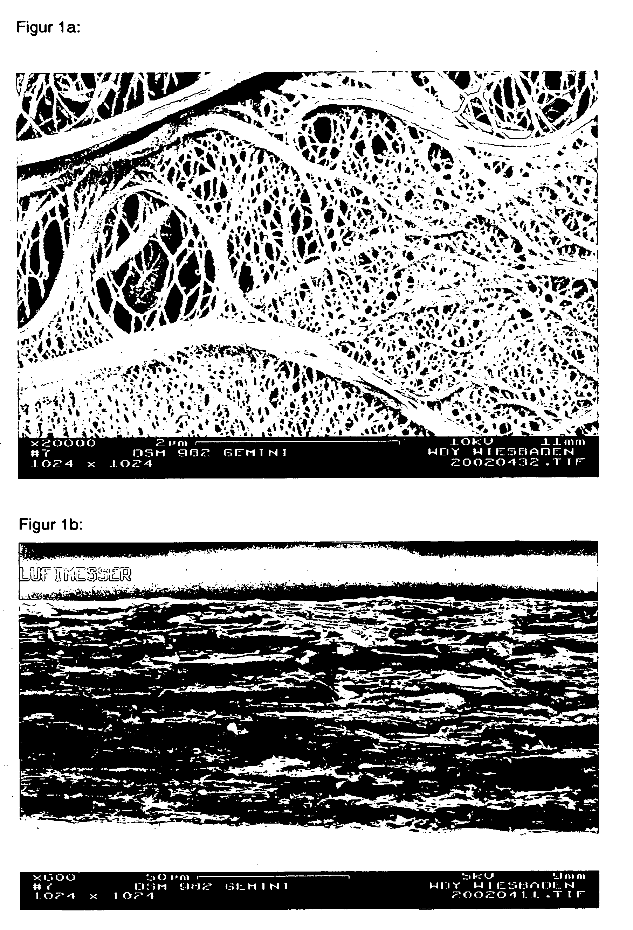

Im Unterschied hierzu hat die Folie für die erfindungsgemäße Verwendung als Inner-Liner eine netzwerkartige, offenporige Struktur in mindestens einer Schicht. Diese Struktur ist, wenn keine geschlossenen abdeckenden Schichten zusätzlich aufgebracht sind, gasdurchlässig. Figuren 1a (Draufsicht) und 1b (Querschnitt), zeigen eine solche offenporige Netzstruktur.

Diese netzwerkartige, offenporige Struktur entsteht nicht durch unverträgliche Füllstoffe, sondern nach einem technisch ganz verschiedenen Verfahren. Die poröse Schicht enthält Poylpropylen und ß-Nukleierungsmittel. Diese Mischung aus Polypropylen mit β-Nukleierungsmittel wird zunächst wie üblich bei der Folienherstellung in einem Extruder aufgeschmolzen und durch eine Breitschlitzdüse als Schmelzefilm auf eine Abkühlwalze extrudiert. Das ß-Nukleierungsmittel fördert die Kristallisation von ß-kristallinem Polypropylen beim Abkühlen des Schmelzefilms, so daß eine unverstreckte Vorfolie mit einem hohen Gehalt an ß-kristallinem Polypropylen entsteht. Beim Verstrecken dieser Vorfolie können die Temperatur und Streckbedingungen so gewählt werden, daß sich die ß-Kristallite in die thermisch stabilere alpha Kristallite des Polypropylens umwandeln. Da die Dichte der β-Kristallite niedriger ist geht diese Umwandlung mit einer Volumenschrumpfung in diesem Bereich einher, führt in Verbindung mit dem Streckprozeß zu der charakteristischen offenporigen Struktur, ähnlich einem aufgerissenen Netzwerk. Äußerlich sieht die Folie weiß und undurchsichtig aus, obwohl wenn keine Pigmente oder Füllstoffe enthalten sind.

Die Zusammensetzung der porösen Schicht mit dieser chrakteristischen Netzwerkstruktur, nachstehend auch poröse Schicht genannt, wird nunmehr im Einzeln näher beschrieben. Die poröse Schicht enthält Propylen-Homopolymer und/oder ein Propylenblockcopolymer, gegebenenfalls zusätzlich andere Polyolefine, und mindestens ein ß-Nukleierungsmittel, sowie gegebenenfalls zusätzlich übliche Additive, beispielsweise Stabilisatoren, Neutralisationsmittel, Gleitmittel, Antistatika, Pigmente in jeweils wirksamen Mengen. Im allgemeinen wird auf zusätzliche unverträgliche vakuolenintierende Füllstoffe wie Calciumcarbonat oder Polyester, wie PET oder PBT, verzichtet, so daß die Schicht im allgemeinen weniger als 5 Gew.-%, vorzugsweise 0 bis höchstens 1 Gew.-% dieser vakuoleninitierenden Füllstoffe enthält. Derartige geringe Mengen können beispielsweise über die Einarbeitung von Folienregenerat in die Schicht gelangen.

Im allgemeinen enthält die poröse Schicht mindestens 70 bis <100 Gew.-%, vorzugsweise 80 bis 99,95 Gew.-%, insbesondere 90 bis 97 Gew.-%, eines Propylenhomopolymeren und/oder Propylenblockcopolymeren und 0,001 bis 5 Gew.-%, vorzugsweise 0,01 bis 3 Gew.-%, insbesondere 0,1 bis 1Gew.-% mindestens eines ß-Nukleierungsmittels, jeweils bezogen auf das Gewicht der Schicht (Rest sind andere Polyolefine und/oder die genannten Additive).

Geeignete Propylenhomopolymeren enthalten 80 bis 100 Gew.-%, vorzugsweise 90 bis 100 Gew.-% Propyleneinheiten und besitzen einen Schmelzpunkt von 140°C oder höher, vorzugsweise 150 bis 170°C, und im allgemeinen einen Schmelzflußindex von 0,5 bis 10 g/10 min, vorzugsweise 2 bis 8 g/10 min, bei 230°C und einer Kraft von 2,16 kg (DIN 53735). Isotaktische Propylenhomopolymere mit einem ataktischen Anteil von 15 Gew.-% und weniger, stellen bevorzugte Propylenpolymere für die Schicht dar, wobei isotaktisches Propylenhomopolymer besonders bevorzugt ist.

Geeignete Propylenblockcopolymere enthalten überwiegend, d.h. mehr als 50 Gew.-%, vorzugsweise 70 bis 99 Gew.-%, insbesondere 90 bis 99 Gew.-% Propyleneinheiten. Geeignete Comonomere in entsprechenden Mengen sind Ethylen, Butylen oder höhere Alkenhomologe, worunter Ethylen bevorzugt ist. Der Schmelzflußindex der Blockcopolymeren liegt in einem Bereich von 1 bis 15 g/10min, vorzugsweise 2 bis 10g/10Min. Der Schmelzpunkt liegt über 140°C, vorzugsweise in einem Bereich von 150 bis 165 °C.

Die angegebenen Gewichtsprozente beziehen sich auf das jeweilige Polymere.

Mischungen aus Propylenhomopolymer und Propylenblockcopolymer enthalten diese beide Komponenten in beliebigen Mischungsverhältnissen. Vorzugsweise liegt das Verhältnis (Gewichtsverhältnis) von Propylenhomopolymer zu Propylenblockcopolymer in einem Bereich von 10 : 90 bis 90 : 10 vorzugsweise, 20 : 70 bis 70 : 20. Derartige Mischungen aus Homopolymer und Blockcopolymer sind besonders bevorzugt und verbessern die Optik der porösen Schicht.

Gegebenenfalls kann die poröse Schicht zusätzlich zu dem Propylenhomopolymeren und/oder Propylenblockcopolymeren anderer Polyolefine enthalten. Der Anteil dieser anderen Polyolefine liegt im allgemeinen unter 30 Gew.-%, vorzugsweise in einem Bereich von 1 bis 20 Gew.-%. Andere Polyolefine sind beispielsweise statistische Copolymere von Ethylen und Propylen mit einem Ethylengehalt von 20 Gew.-% oder weniger, statistische Copolymere von Propylen mit $C_4$-$C_8$-Olefinen mit einem Olefingehalt von 20 Gew.-% oder weniger, Terpolymere von Propylen, Ethylen und Butylen mit einem Ethylengehalt von 10 Gew.-% oder weniger und mit einem Butylengehalt von 15 Gew.-% oder weniger, oder Polyethylene, wie HDPE, LDPE, VLDPE, MDPE und LLDPE. In diesen Ausführungsformen wird der Gehalt an Propylenhomopolymeren und/oder Propylenblockcopolymeren entsprechend erniedrigt.

Als ß-Nukleierungsmittel für die poröse Schicht sind grundsätzlich alle bekannten Zusatzstoffe geeignet, welche die Bildung von ß-Kristallen beim Abkühlen einer Polypropylenschmelze fördern. Derartige ß-Nukleierungsmittel, als auch ihre Wirkungsweise in einer Polypropylenmatrix, sind an sich im Stand der Technik bekannt und werden nachstehend im Einzelnen beschrieben.

Für die Zwecke der vorliegenden Erfindung werden in der porösen Schicht vorzugsweise hochaktive ß-Nukleierungsmittel eingesetzt, welche beim Abkühlen des Schmelzefilms einen β-Anteil von 30-95%, vorzugsweise von 50-90% erzeugen. Hierfür ist beispielsweise ein zweikomponentiges Nukleierungssystem aus Calciumcarbonat und organischen Dicarbonsäuren geeignet, welches in der DE 3610644 beschrieben ist, auf welche hiermit ausdrücklich Bezug genommen wird. Besonders vorteilhaft sind Calciumsalze der Dicarbonsäuren, wie Calciumpimelat oder Calciumsuberat wie in DE 4420989 beschrieben, auf die ebenfalls ausdrücklich Bezug genommen wird. Auch die in EP-0557721 beschriebenen Dicarboxamide insbesondere N,N-Dicyclohexyl-2,6-Naphtalen dicarboxamide sind geeignete ß-Nukleierungsmittel.

Zusätzlich zu den Nukleierungsmitteln ist die Einhaltung eines bestimmten Temperaturbereiches und die Verweilzeit des Schmelzefilms bei diesen Temperaturen beim Abziehen des extrudierten Schmelzefilms für die Erzielung eines hohen Anteils an ß-kristallinem Polypropylen in der Vorfolie wichtig. Die Abkühlung des extrudierten Schmelzefilms erfolgt vorzugsweise bei einer Temperatur von 60 bis 130°C, insbesondere 80 bis 120°C. Eine langsame Abkühlung fördert das Wachstum der ß-Kristallite ebenfalls, daher sollte die Abzugsgeschwindigkeit, d.h. die Geschwindigkeit mit welcher der Schmelzefilm über die erste Kühlwalze läuft, langsam sein. Bei einer gegebenen Anordnung von Abzugswalzen kann über die Abzugsgeschwindigkeit sichergestellt werden, daß die Folie langsam auf die jeweilige Temperatur abkühlt, bzw. ausreichend lange bei dieser Temperatur gehalten wird. Im allgemeinen sind Verweilzeiten von 10 sec bis zu mehreren Minuten möglich. Längere Verweilzeiten von über 3 Minuten sind zwar technisch möglich und erhöhen den ß-Kristallinen Anteil in an sich vorteilhafter Weise, aber mit einer derartigen Prozeßführung wird der Herstellprozeß sehr langsam und dadurch unökonomisch. Daher beträgt die Verweilzeit vorzugsweise 15 bis 120 sec. Die Abzugsgeschwindigkeit beträgt vorzugsweise weniger als 25 m/min, insbesondere 1 bis 20 m/min. Je höher der erzielte Anteil an ß-Kristallen in der Vorfolie desto einfacher sind die netzartigen porösen Strukturen durch Verstrecken zu erzielen, im allgemeinen werden bei gleichbleibenden Verfahrensbedingungen umso höhere Porositäten erzielt je höher der ß-Anteil in der Vorfolie ist. Beim Verstrecken der Folie mit diesen hohen Gehalten ß-Polypropylen entsteht die besondere Netzwerkstruktur.

Besonders bevorzugte Ausführungsformen enthalten 0,001 bis 5 Gew.-%, vorzugsweise 0,05 bis 0,5 Gew.-%, insbesondere 0,1 bis 0.3 Gew.-% Calcium-Pimelat oder Calcium-Suberat in der porösen Schicht aus Propylenpolymer.

Im allgemeinen ist die poröse Folie einschichtig und besteht nur aus der porösen Schicht. Es versteht sich jedoch von selbst, daß diese einschichtige Folie gegebenenfalls mit einer Bedruckung oder einer Beschichtung oder einer Metallisierung versehen werden kann, bevor sie als Inner-Liner eingesetzt wird.

Gegebenenfalls kann die poröse Schicht auf einer Seite mit einer Corona, Flamm- oder Plasmabehandlung versehen werden, um die Haftung gegenüber Druckfarben oder Beschichtungen zu verbessern.

Die Dichte der porösen Schicht liegt im allgemeinen in einem Bereich von 0,2 bis 0,80 $g/cm^3$, vorzugsweise 0,3 bis 0,65 $g/cm^3$, wobei eine Dichte von weniger als 0,6 $g/cm^3$ bevorzugt ist. Die Dicke der porösen Schicht liegt in einem Bereich von 20 bis 100$\mu$m, vorzugsweise 25 bis 60$\mu$m. In einschichtigen Ausführungsformen entspricht dies selbstverständlich der Dichte, bzw. der Dicke der Folie.

In einer weiteren Ausführungsform kann die poröse Schicht mit mindestens einer Deckschicht versehen werden. Die zusätzliche Deckschicht kann beispielsweise durch Laminierung oder Kaschierung der porösen Schicht mit einer weiteren Folie aufgebracht werden. Vorzugsweise handelt es sich um eine coextrudierte Deckschicht. In diesen mehrschichtigen Ausführungsformen beträgt die Dicke der porösen Schicht mindestens 20 bis 100$\mu$m, vorzugsweise liegt die Dicke der porösen Schicht in einem Bereich von 25 bis 80$\mu$m, insbesondere 30 bis 50$\mu$m. Die Dicke dieser Deckschicht liegt im allgemeinen in einem Bereich von 0,5 - 5 $\mu$m, vorzugsweise 1 - 3 $\mu$m.

Die gegebenenfalls coextrudierte Deckschicht enthält im allgemeinen mindestens 70 Gew.-%, vorzugsweise 75 bis <100 Gew.-%, insbesondere 90 bis 98 Gew.-%, eines Polyolefins, vorzugsweise eines Propylenpolymeren und gegebenenfalls weitere übliche Additive wie Neutralisationsmittel, Stabilisator, Antistatika, Gleitmittel, z.B. Fettsäureamide oder Siloxane oder Antiblockmittel in jeweils wirksamen Mengen.

Das Propylenpolymere der Deckschicht ist beispielsweise ein Propylenhomopolymer, wie vorstehend für die poröse Schicht bereits beschrieben oder ein Copolymer aus Propylen und Ethylen oder Propylen und Butylen oder Propylen und einem anderen Olefin mit 5 bis 10 Kohlenstoffatomen. Für die Zwecke der Erfindung sind für die Deckschicht auch Terpolymere von Ethylen und Propylen und Butylen oder Ethylen und Propylen und einem anderen Olefin mit 5 bis 10 Kohlenstoffatomen geeignet. Weiterhin können Mischungen oder Blends aus zwei oder mehreren der genannten Co- und Terpolymeren eingesetzt werden.

Für die Deckschicht sind statistische Ethylen-Propylen-Copolymere und Ethylen-Propylen-Butylen-Terpolymere bevorzugt, insbesondere statistische Ethylen-Propylen-Copolymere mit einem Ethylengehalt von 2 bis 10 Gew.-%, bevorzugt 5 bis 8 Gew.-%, oder statistische Ethylen-Propylen-Butylen-1-Terpolymere mit einem Ethylengehalt von 1 bis 10 Gew.-%, bevorzugt 2 bis 6 Gew.-%, und einem Butylen-1-Gehalt von 3 bis 20 Gew.-%, bevorzugt 8 bis 10 Gew.-%, jeweils bezogen auf das Gewicht des Co- oder Terpolymeren.

Die vorstehend beschriebenen statistischen Co- und Terpolymeren weisen im allgemeinen einen Schmelzflußindex von 1,5 bis 30 g/10 min, vorzugsweise von 3 bis 15g/10 min, auf. Der Schmelzpunkt liegt im Bereich von 105°C bis 140°C. Das vorstehend beschriebene Blend aus Co- und Terpolymeren hat einen Schmelzflußindex von 5 bis 9 g/10 min und einen Schmelzpunkt von 120 bis 150°C. Alle vorstehend angegebenen Schmelzflußindices werden bei 230°C und einer Kraft von 2,16kg (DIN 53735) gemessen.

Gegebenenfalls kann die Oberfläche dieser Deckschicht zur Verbesserung der Bedruckbarkeit mit einer Corona-, Flamm oder Plasmabehandlung versehen werden. Die Dichte der Folie wird durch die nicht poröse Deckschicht, die auch keine Vakuolen enthält, gegenüber einschichtigen Ausführungsformen nur unwesentlich erhöht und liegt daher auch für diese Ausführungsformen im allgemeinen in einem Bereich von 0,25 bis 0,8 g/cm3, vorzugsweise 0,25 bis 0,6g/cm3, insbesondere < 0,5 g/cm3.

Gegebenenfalls kann die Deckschicht zusätzlich übliche Additive wie Stabilisatoren, Neutralisationsmittel, Antiblockmittel, Gleitmittel, Antistatika etc. in jeweils üblichen Mengen enthalten.

Die poröse Folie für die erfindungsgemäße Verwendung wird vorzugsweise nach dem an sich bekannten Extrusionsverfahren oder Coextrusionsverfahren hergestellt.

Im Rahmen dieses Verfahrens wird so vorgegangen, daß das Polypropylen, welches mit ß-Nukleierungsmittel vermischt ist, in einem Extruder aufgeschmolzen und durch eine Flachdüse auf eine Abzugswalze extrudiert wird, auf der sich die Schmelze unter Ausbildung der ß-Kristallite verfestigt. Im Falle der zweischichtigen Ausführungsform erfolgt die entsprechende Coextrusion zusammen mit der Deckschicht. Die Abkühltemperaturen und Abkühlzeiten werden so gewählt, daß ein möglichst hoher Anteil an ß-kristallinem Polypropylen in der Vorfolie entsteht. Diese Vorfolie mit einem hohen Anteil an ß-kristallinem Polypropylen wird anschließend derart biaxial gestreckt, daß es bei der Verstreckung zu einer Umwandlung der ß-Kristallite in alpha Polypropylen und zur Ausbildung der Netzwerk-Struktur kommt. Die biaxial gestreckte Folie wird abschließend thermofixiert und gegebenenfalls auf einer Oberfläche corona-, plasma- oder flammbehandelt.

Die biaxiale Streckung (Orientierung) wird im allgemeinen aufeinanderfolgend durchgeführt werden, wobei vorzugsweise zuerst längs (in Maschinenrichtung) und dann quer (senkrecht zur Maschinenrichtung) gestreckt wird.

Die Abzugswalze oder die Abzugswalzen werden bei einer Temperatur von 60 bis 130°C, vorzugsweise 80 bis 120°C gehalten, um die Ausbildung eines hohen Anteils an ß-kristallinem Polypropylen zu fördern.

Bei der Verstreckung in Längsrichtung beträgt die Temperatur weniger als 140°C, vorzugsweise 90 bis 125 °C. Das Streckverhältnis liegt in einem Bereich 2:1 bis 5:1 Die Verstreckung in Querrichtung erfolgt bei einer Temperatur von größer 140°C, vorzugsweise bei 145 bis 160°C. Das Querstreckverhältnis liegt in einem Bereich von 3:1 bis 6:1 gestreckt.

Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens.

An die biaxiale Streckung der Folie schließt sich im allgemeinen ihre Thermofixierung (Wärmebehandlung) an, wobei die Folie etwa 0,5 bis 10 s lang bei einer Temperatur von 110 bis 150°C gehalten wird. Anschließend wird die Folie in üblicher Weise mit einer Aufwickeleinrichtung aufgewickelt.

Vorzugsweise wird, wie oben erwähnt, nach der biaxialen Streckung üblicherweise eine Oberfläche der Folie nach einer der bekannten Methoden corona-, plasma- oder flammbehandelt.

Nach diesem Verfahren erhält man eine Folie mit einer poröse Schicht. Die Folie zeichnet sich insgesamt durch eine weiße oder opake Erscheinung aus. Die poröse Schicht hat eine netzähnliche Struktur (siehe Figuren 1a und 1b), die gegenüber Gasen durchlässig ist. Die Gasdurchlässigkeit der porösen Schicht kann beispielsweise durch den Gurley Wert bestimmt werden, welcher angibt wie lange der Durchtritt von 100 $cm^3$ Luft unter definierte Bedingungen durch die einschichtige Folie dauert.

Es wurde gefunden, daß Gasdurchlässigkeiten und entsprechend die Gurley Werte, der poröse Schicht varrieren können. Der Gurley Wert liegt im allgemeinen in einem Bereich von >500 bis 10.000 sec. Überraschenderweise kann die Folie für die erfindungsgemäße Anwendung auch eingesetzt werden, wenn der Gurley Wert über 10.000 sec liegt. Es wurde gefunden, daß Gurley-Werte bis zu 500.000 sec betragen können und die Folie dennoch vorteilhaft als Inner-Liner verwendet werden kann. Somit sind auch Ausführungsformen mit Gurley-Werten der porösen Schicht von 12000 bis 300.000 Gurley, vorzugsweise 15000 bis 250.000 Gurley verwendbar. Diese Ausführungsformen lassen sich mit höheren Produktionsgeschwindigkeiten herstellen und weisen daher wesentliche wirtschaftliche Vorteile gegenüber den hochdurchlässigen Ausführungsformen auf. Insbesondere können hier die Abkühlzeiten auf der Abzugswalze verkürzt werden, wodurch die Produktionsgeschwindigkeit erheblich gesteigert wird.

Zur Charakterisierung der Rohstoffe und der Folien wurden die folgenden Messwerte benutzt:

Schmelzflußindex

Der Schmelzflußindex der Propylenpolymeren wurde nach DIN 53 735 bei 2,16 kg Belastung und 230 °C gemessen und bei 190°C und 2,16 kg für Polyethylene.

Schmelzpunkte

DSC-Messung, Maxima der Schmelzkurve, Aufheizgeschwindigkeit 20 K/min.

ß-Kristallgehalt

Zur Bestimmung des ß-kristallinen Anteils (beispielsweise in der Vorfolie) in Polypropylen wird die DSC-Methode verwendet

Die Charakterisierung mittels DSC wird in J. o. Appl. Polymer Science, Vol. 74, p.: 2357-2368, 1999 von Varga beschrieben und folgendermaßen durchgeführt: Die mit dem ß-Nukleator additivierte Probe wird in der DSC zunächst mit einer Aufheizrate von 20°C/min auf 220°C erhitzt und aufgeschmolzen (1. Aufheizen). Danach wird sie mit einer Kühlrate von 10°C/min auf 100°C abgekühlt, bevor sie mit einer Heizrate von 10°C/min (2. Aufheizen) wieder aufgeschmolzen wird. Beim 2. Aufheizen wird aus dem Verhältnis der Schmelzenthalpien der ß-kristallinen Phase ($H_ß$) zu der Summe der Schmelzenthalpien von ß- und $\alpha$-kristalliner Phase ($H_ß + H_\alpha$) der Kristallinitätsgrad $K_{ß,DSC}$ bestimmt.

Dichte

Die Dichte wird nach DIN 53 479, Verfahren A, bestimmt.

Porosität

Die Porosität wird aus den Dichten des ungevoideten PP ($\square_{PP}$) und der Dichte des gevoideten PP ($\square_{PPV}$), wie folgt berechnet :

$$\text{Porosität [\%]} = 100 * (1 - [\square_{PPV}/\square_{PP}])$$

Permeabilität (Gurley-Wert)

Die Permeabilität der Etikettenfolien wurde mit dem Gurley Tester 4110, nach ASTM D 726-58 gemessen. Dabei wird die Zeit bestimmt die 100 $cm^3$ Luft benötigen, um durch die Etikettenfläche von 1 $Inch^2$ (6,452 $cm^2$) zu permeieren. Die Druckdifferenz über der Folie entspricht dabei dem Druck einer Wassersäule von 12,4 cm Höhe. Die benötigte Zeit entspricht dann dem Gurley-Wert.

Die Erfindung wird nunmehr durch die nachfolgenden Beispiele erläutert.

Beispiel 1

Nach dem Extrusionsverfahren wurde aus einer Breitschlitzdüse bei einer Extrusionstemperatur von 245 °C eine einschichtige Folie extrudiert. Die Folie hatte die folgende Zusammensetzung:

| | |
|---|---|
| ca. 50 Gew.-% | Propylenhomopolymerisat (PP) mit einem n-heptanlöslichen Anteil von 4,5 Gew.-% (bezogen auf 100 % PP) und einem Schmelzpunkt von 165°C; und einem Schmelzflußindex von 3,2 g/10 min bei 230 °C und 2,16 kg Belastung (DIN 53 735) und |
| ca. 49,9 Gew.-% | Propylen-Ethylen-Blockcopolymerisat mit einem Ethylenanteil von ca. 5 Gew.-% bezogen auf das Blockcopolymer und einem MFI (230°C und 2,16 kg) von 6 g/10min |
| 0,1 Gew.-% | Ca- Pimelat als ß-Nukleierungsmittel |

Die Folie enthielt zusätzlich Stabilisator und Neutralisationsmittel in üblichen Mengen.

Die aufgeschmolzene Polymermischung wurde nach der Extrusion über eine erste Abzugswalze und ein weiteres Walzentrio abgezogen und verfestigt, anschließend längsgestreckt, quergestreckt und fixiert, wobei im einzelnen die folgenden Bedingungen gewählt wurden:

| | |
|---|---|
| Extrusion: | Extrusionstemperatur 245 °C |
| Abkühlwalze: | Temperatur 125°C, |
| Abzugsgeschwindigkeit: | 1,5 m/min (Verweilzeit auf der Abzugswalze: 55 sec) |
| Längsstreckung: | Streckwalze T = 90 °C |
| Längsstreckung um den | Faktor 4 |
| Querstreckung: | Aufheizfelder T = 145 °C |
| Streckfelder | T = 145°C |
| Querstreckung um den | Faktor 4 |

Die so hergestellte poröse Folie war ca. 80 $\mu$m dick und wies eine Dichte von 0,35 g/$cm^3$ auf und zeigte ein gleichmäßiges weiß-opakes Aussehen. Die Porosität betrug 56% und der Gurley-Wert 1040 s.

Beispiel 2

Es wurde eine Folie wie in Beispiel 1 beschrieben hergestellt. Im Unterschied zu Beispiel 1 wurden jetzt als ß-Nukleierungsmittel 0,3 Gew.-% bezogen auf das Gewicht der Schicht eines Dicarboxamids eingesetzt. Die so hergestellte poröse Folie war ca. 70 $\mu$m dick und wies eine Dichte von 0,40 g/cm$^3$ auf und zeigte ein gleichmäßiges weiß-opakes Aussehen. Die Porosität betrug 51 % und der Gurley-Wert 1200 s.

Beispiel 3

Es wurde eine Folie wie in Beispiel 1 beschrieben hergestellt. Die Zusammensetzung wurde nicht geändert. Im Unterschied zu Beispiel 1 wurde bei der Herstellung eine höhere Abzugsgeschwindigkeit: 3 m/min (Verweilzeit auf der Abzugswalze: 27 sec) gewählt und eine Abzugstemperatur von 120°C eingestellt. Die so hergestellte poröse Folie war ca. 60 $\mu$m dick und wies eine Dichte von 0,5 g/cm$^3$ auf und zeigte ein gleichmäßiges weiß-opakes Aussehen. Die Porosität betrug 41 % und der Gurley-Wert 36.000 s.

Beispiel 4

Es wurde eine Folie wie in Beispiel 1 beschrieben hergestellt. Die Zusammensetzung wurde nicht geändert. Im Unterschied zu Beispiel 1 wurde bei der Herstellung eine höhere Abzugsgeschwindigkeit von 5 m/min (Verweilzeit auf der Abzugswalze: 17 sec) gewählt und eine Abzugstemperatur von 115°C eingestellt. Die so hergestellte poröse Folie war ca. 90 $\mu$m dick und wies eine Dichte von 0,5 g/cm$^3$ auf und zeigte ein gleichmäßiges weiß-opakes Aussehen. Die Porosität betrug 42 % und der Gurley-Wert 170.000 s.

Vergleichsbeispiel 1

Es wurde durch Coextrusion und durch anschließende stufenweise Orientierung in Längs- und in Querrichtung eine opake dreischichtige Folie mit einem Schichtaufbau ABC mit einer Gesamtdicke von 80 $\mu$m hergestellt. Die Deckschichten hatten eine Dicke von jeweils 0,6$\mu$m.

Basisschicht B (= vakuolenhaltige Schicht):

93 Gew.-%     Propylenhomopolymer mit einem Schmelzpunkt von 165°C

7,0 Gew.-%     CaCO3 vom Typ Millicarb mit einem mittleren Durchmesser von 3$\mu$m

Deckschicht A.

99,67 Gew.-%     statistisches Ethylen-Propylen-Copolymeres mit einem C2-Gehalt von 3,5 Gew.-%

0,33 Gew.-%     SiO2 als Antiblockmittel mit einer mittleren Durchmesser von 2 $\mu$m

Deckschicht B wie Deckschicht A

Die Herstellungsbedingungen in den einzelnen Verfahrensschritten waren:

| | |
|---|---|
| Extrusion Temperaturen | 280°C |
| Temperatur der Abzugswalze: | 30 °C |
| Längsstreckung: Temperatur: | 122 °C |
| Längsstreckverhältnis: | 6,0 |
| Querstreckung: Temperatur: | 155 °C |
| Querstreckverhältnis: | 8,0 |
| Fixierung: Temperatur: | 140 °C |
| Konvergenz: | 15 % |

Auf diese Weise wurde eine opake vakuolenhaltige Folie erhalten mit einer Dichte von 0,6 g/cm3. Die Folie war nicht porös, ein Gurley Wert ließ sich daher an dieser Folie nicht bestimmen.

Anwendung:

Die Folien nach den Beispielen 1 bis 4 wurden auf einer kommerziellen Zigaretteneinschlagsmaschine als Inner-liner eingesetzt und konnten ohne größere Probleme verwendet werden.

Im Vergleich konnte die biaxial orientierte Polypropylenfolien mit Vakuolen in dieser Anwendung nicht eingesetzt werden. Auf Grund der starken Rückstellkräfte des Materials konnten die einzelnen Zigaretten nicht richtig eingeschlagen werden.

**Patentansprüche**

1. Verwendung einer einschichtigen oder mehrschichtigen biaxial orientierten Polypropylen-Folie mit mindestens einer porösen Schicht als Inner-Liner einer Zigarettenverpackung, **dadurch gekennzeichnet, daß** die poröse Schicht eine offenporige netzwerkartige Struktur aufweist.

2. Verwendung einer Folie nach Anspruch 1, **dadurch gekennzeichnet, daß** die Dichte der Folie 0,2 bis 0,80 g/cm$^3$ beträgt.

3. Verwendung einer Folie nach einem der Ansprüche 1 bis 2, **dadurch gekennzeichnet, daß** der Gurley Wert der Folie > 10.000 bis 500.000 sec beträgt.

4. Verwendung einer Folie nach einem der Ansprüche 1 bis 3, **dadurch gekennzeichnet, daß** der Gurley Wert der Folie >500 bis 10.000 sec beträgt.

5. Verwendung einer Folie nach einem der Ansprüche 1 bis 4, **dadurch gekennzeichnet, daß** die Folie auf einer Oberfläche metallisiert ist.

6. Verwendung einer Folie nach einem der Ansprüche 1 bis 4, **dadurch gekennzeichnet, daß** die Folien beidseitig metallisiert ist.

7. Verwendung einer Folie nach einem der Ansprüche 1 bis 6, **dadurch gekennzeichnet, daß** die Folie geprägt ist.

8. Verwendung einer Folien nach Anspruch 5, **dadurch gekennzeichnet, daß** die metallisierte Oberfläche der Folie geprägt ist.

9. Verwendung einer Folien nach einem der Ansprüche 1 bis 8, **dadurch gekennzeichnet, daß** die Folie in der porösen Schicht 0,001 bis 5 Gew.-%, eines ß-Nukleierungsmittel und 70 bis <100 Gew.-% eines Propylenhomopolymeren und/oder Propylenblockcopolymeren enthält.

10. Verwendung einer Folien nach einem der Ansprüche 1 bis 9, **dadurch gekennzeichnet, daß** Folie ein oder beidseitig Deckschicht/en aus Polyolefin aufweist.

11. Verwendung einer Folie nach einem der Ansprüche 1 bis 10, **dadurch gekennzeichnet, daß** die Folie eine Gesamtdicke von mindestens 20 bis 100$\mu$m hat.

12. Verwendung einer Folie nach einem der Ansprüche 10 bis 11, **dadurch gekennzeichnet, daß** die Deckschicht eine Dicke von 0,5 bis 6 $\mu$m hat

13. Verwendung einer Folie nach einem der Ansprüche 10 bis 12, **dadurch gekennzeichnet, daß** die Deckschicht siegelfähig ist.

14. Verwendung einer Folie nach einem der Ansprüche 1 bis 13, **dadurch gekennzeichnet, daß** die Zigarettenpackung eine Klappfaltschachtel ist.

15. Verwendung einer Folie nach einem der Ansprüche 1 bis 14, **dadurch gekennzeichnet, daß** die Zigarettenpackung eine Weichpackung ist.

## Claims

1. A use of a single-layer or ultilayer, biaxially oriented polypropylene film having at least one porous layer as an inner liner of a cigarette pack, **characterised in that** the porous layer has an open-pored, network-like structure.

2. The use of a film according to claim 1, **characterised in that** the density of the film is from 0.2 to 0.80 g/cm$^3$.

3. The use of a film according to any one of claims 1 to 2, **characterised in that** the Gurley value of the film is > 10,000 to 500,000 sec.

4. The use of a film according to any one of claims 1 to 3, **characterised in that** the Gurley value of the film is > 500 to 10,000 sec.

5. The use of a film according to any one of claims 1 to 4, **characterised in that** the film is metallised on one surface.

6. The use of a film according to any one of claims 1 to 4, **characterised in that** the film is metallised on both sides.

7. The use of a film according to any one of claims 1 to 6, **characterised in that** the film is embossed.

8. The use of a film according to claim 5, **characterised in that** the metallised surface of the film is embossed.

9. The use of a film according to any one of claims 1 to 8, **characterised in that** the porous layer of the film contains 0.001 % to 5 % by weight of a β-nucleating agent and 70 % to < 100 % by weight of a propylene homopolymer and/or a propylene block copolymer.

10. The use of a film according to any one of claims 1 to 9, **characterised in that** the film has a polyolefin covering layer on one or both sides thereof.

11. The use of a film according to any one of claims 1 to 10, **characterised in that** the film has a total thickness of at least 20 to 100 μm.

12. The use of a film according to any one of claims 10 to 11, **characterised in that** the covering layer has a thickness from 0.5 to 6 μm.

13. The use of a film according to any one of claims 10 to 12, **characterised in that** the covering layer can be sealed.

14. The use of a film according to any one of claims 1 to 13, **characterised in that** the cigarette pack is a collapsible folding box.

15. The use of a film according to any one of claims 1 to 14, **characterised in that** the cigarette pack is a soft pack.

## Revendications

1. Utilisation d'une feuille monocouche ou multicouche en polypropylène, laquelle est biaxialement orientée et comporte au moins une couche poreuse, en tant que revêtement intérieur d'un emballage de cigarettes, **caractérisée en ce que** ladite couche poreuse comporte une structure réticulée à pores ouverts

2. Utilisation d'une feuille selon la revendication 1, **caractérisée en ce que** la densité de ladite feuille est comprise entre 0,2 et 0,80 g/cm$^3$.

3. Utilisation d'une feuille selon l'une des revendications 1 à 2, **caractérisée en ce que** ladite feuille présente un indice de Gurley compris entre > 10 000 et 500 000 s.

4. Utilisation d'une feuille selon l'une des revendications 1 à 3, **caractérisée en ce que** ladite feuille présente un indice de Gurley compris entre > 500 et 10 000 s.

5.  Utilisation d'une feuille selon l'une des revendications 1 à 4, **caractérisée en ce que** ladite feuille est métallisée sur une surface.

6.  Utilisation d'une feuille selon l'une des revendications 1 à 4, **caractérisée en ce que** ladite feuille est métallisée sur ses deux côtés.

7.  Utilisation d'une feuille selon l'une des revendications 1 à 6, **caractérisée en ce que** ladite feuille est gaufrée.

8.  Utilisation d'une feuille selon la revendication 5, **caractérisée en ce que** la face métallisée de ladite feuille est gaufrée.

9.  Utilisation d'une feuille selon l'une des revendications 1 à 8, **caractérisée en ce que** ladite feuille contient, dans ladite couche poreuse, 0,001 à 5 % en poids d'un agent de nucléation bêta et 70 à < 100 % en poids d'un homopolymère de propylène et/ou d'un copolymère à blocs de propylène.

10. Utilisation d'une feuille selon l'une des revendications 1 à 9, **caractérisée en ce que** ladite feuille présente, sur un côté ou sur ses deux côtés, une couche de couverture en polyoléfine.

11. Utilisation d'une feuille selon l'une des revendications 1 à 10, **caractérisée en ce que** ladite feuille présente une épaisseur totale comprise entre au moins 20 et 100 $\mu$m.

12. Utilisation d'une feuille selon l'une des revendications 10 à 11, **caractérisée en ce que** ladite couche de couverture présente une épaisseur comprise entre 0,5 et 6 $\mu$m.

13. Utilisation d'une feuille selon l'une des revendications 10 à 12, **caractérisée en ce que** ladite couche de couverture est apte au scellement.

14. Utilisation d'une feuille selon l'une des revendications 1 à 13, **caractérisée en ce que** le paquet de cigarettes et un paquet cartonné comportant un élément repliable.

15. Utilisation d'une feuille selon l'une des revendications 1 à 14, **caractérisée en ce que** le paquet de cigarettes est un paquet souple

Figur 1a:

Figur 1b:

EP 2 491 074 B1

Figur 2a

Figur 2b:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3632376
- WO 2007051791 A2
- WO 0012302 A1
- EP 0317818 A2
- DE 4333462
- DE 20120977
- DE 2511241
- DE 3610644
- DE 4420989
- EP 0557721 A

**In der Beschreibung aufgeführte Nicht-Patentliteratur**

- **VARGA.** *J. o. Appl. Polymer Science,* 1999, vol. 74, 2357-2368